Europäisches Patentamt

European Patent Office

Office européen des brevets

(19)

(11) Numéro de publication: **0 102 894**

**A1**

(12) ## DEMANDE DE BREVET EUROPEEN

(21) Numéro de dépôt: **83401690.9**

(22) Date de dépôt: **22.08.83**

(51) Int. Cl.³: **C 01 B 17/05**

(30) Priorité: **25.08.82 FR 8214591**

(43) Date de publication de la demande:
**14.03.84 Bulletin 84/11**

(84) Etats contractants désignés:
**BE DE FR GB IT NL**

(71) Demandeur: **COMPAGNIE FRANCAISE DE RAFFINAGE
Société anonyme dite:
5, rue Michel-Ange
F-75781 Paris Cedex 16(FR)**

(72) Inventeur: **Biedermann, Jean-Michel
10, rue du Languedoc
F-76290 Montivilliers(FR)**

(72) Inventeur: **Patureaux, Thierry
3, rue du 11 Septembre 1944 Fontaine la Mallet
F-76290 Montivilliers(FR)**

(72) Inventeur: **Rossarie, Jean
3, rue Marceau Flandre
F-76000 Le Havre(FR)**

(74) Mandataire: **Jolly, Jean-Pierre et al,
Cabinet BROT et JOLLY 83, rue d'Amsterdam
F-75008 Paris(FR)**

(54) Procédé d'élimination de l'hydrogène sulfuré contenu dans un mélange gazeux.

(57) L'invention concerne un procédé d'élimination de l'hydrogène sulfuré contenu dans un gaz à épurer, par réaction entre l'hydrogène sulfuré et de l'anhydride sulfureux, dans un solvant commun à ces deux composés.

Selon l'invention, cette réaction est effectuée à une température inférieure à 112°C et, de préférence, comprise entre 0 et 70°C, dans un réacteur à agitation comprenant à sa partie supérieure un orifice d'évacuation vers un séparateur, d'où est récupéré le soufre à l'état solide.

EP 0 102 894 A1

0102894

Procédé d'élimination de l'hydrogène sulfuré contenu dans un mélange gazeux

La présente invention concerne un perfectionnement à un procédé d'élimination de l'hydrogène sulfuré contenu dans un gaz à épurer du type décrit dans le brevet français n° 2.411.802 au nom de la Demanderesse.

Ce procédé comprend les étapes suivantes:

a) une étape de réaction dudit hydrogène sulfuré sur de l'anhydride sulfureux, dans un solvant de ces deux composés et en présence d'un excès d'hydrogène sulfuré, ladite réaction conduisant à l'obtention:
- d'une part, d'un gaz partiellement épuré contenant l'excès d'hydrogène sulfuré utilisé pour la réaction,
- d'autre part, de soufre formé lors de la réaction,

b) une étape d'absorption de l'excès d'hydrogène sulfuré contenu dans le gaz partiellement épuré dans un solvant de l'hydrogène sulfuré, ladite absorption conduisant à l'obtention:
- d'une part, d'un gaz épuré,
- d'autre part, d'une solution d'hydrogène sulfuré dans un solvant,

ledit procédé étant caractérisé en ce que le solvant utilisé pour l'étape d'absorption est identique à celui utilisé pour l'étape de réaction et en ce que la solution d'hydrogène sulfuré obtenue à la suite de l'étape d'absorption est recyclée à l'étape de réaction.

Dans cette définition du procédé, on entend par "gaz à épurer" des mélanges gazeux, naturels ou provenant d'unités industrielles, contenant de l'hydrogène sulfuré, qu'il est nécessaire d'éliminer de ces mélanges préalablement à leur utilisation ou à leur rejet dans l'atmosphère. L'expression "gaz épuré" désigne un mélange gazeux d'où l'hydrogène sulfuré a été éliminé de façon pratiquement complète.

Dans le brevet précédemment cité, on estimait qu'il était préférable, pour des raisons de manutention, de recueillir le soufre à l'état liquide à la sortie du réacteur; il était donc indiqué que la température dans le réacteur était de préférence comprise entre 112°C (température de fusion du soufre) et 150°C.

Cependant, au cours de travaux ultérieurs, la Demanderesse a découvert que la récupération du soufre peut être effectuée avec avantage d'une façon différente.

Le but de la présente invention est donc l'élimination de l'hydrogène sulfuré contenu dans des mélanges gazeux, par la mise en oeuvre d'une variante dudit procédé.

A cet effet, la présente invention a pour objet un procédé d'élimination de l'hydrogène sulfuré contenu dans un gaz à épurer, selon lequel la réaction de l'hydrogène sulfuré, contenu dans le gaz à épurer, sur l'anhydride sulfureux est effectuée dans un solvant de ces deux composés et réalisée dans un réacteur dont toutes les parties sont maintenues à une température inférieure à 112°C.

Le soufre qui est formé pendant la réaction est maintenu en suspension à l'aide d'une agitation au sein du réacteur et il est évacué hors de ce réacteur, vers un décanteur, à l'aide d'un orifice d'évacuation disposé à la partie supérieure dudit réacteur.

On sait en effet que la réaction de Claus peut être réalisée à des températures très variées, comprises entre 0°C et 300°C. Les réacteurs à garnissage utilisés jusqu'à présent pour mettre en oeuvre la réaction de Claus, dans lesquels le soufre est obtenu à l'état liquide, présentent toutefois un certain nombre d'inconvénients, lorsqu'ils sont appliqués à la mise en oeuvre de la réaction de Claus avec récupération du soufre à l'état de suspension. En effet:

- les réacteurs à garnissage doivent avoir un volume important, afin de pouvoir fournir une aire interfaciale satisfaisante, ce qui a pour conséquence l'apparition de réactions secondaires parasites, telles que des réactions entre des oléfines, l'hydrogène sulfuré et le soufre, conduisant à la
formation de sous-produits;

- les sels d'ammonium qui peuvent se former, de même que des
produits de conversion, risquent de provoquer un bouchage du
réacteur du fait de l'effet de filtre du garnissage;

- le soufre produit et les sels sous-produits décantent dans
le réacteur, ce qui complique les opérations d'évacuation de
ces produits du réacteur;

- de plus, le transfert de chaleur entre la partie centrale du
réacteur et ses parois est insuffisant, ce qui oblige à utiliser un échangeur réfrigérant interne, qui accroît les risques de bouchage.

Le brevet français 1.212.350 propose de remédier aux inconvénients précités en effectuant la réaction de Claus à des températures comprises entre 38 et 65°C, puis en portant la température des effluents au-dessus de 112°C, de façon à liquéfier les particules de soufre formées au cours de la réaction.
La Demanderesse, au cours de ses travaux, a trouvé que cette
procédure présente un certain nombre d'inconvénients et n'élimine pas complètement les risques de bouchage du réacteur par
le soufre.

L'invention vise donc à remédier à ces inconvénients en proposant un procédé permettant l'élimination par réaction de Claus
de l'hydrogène sulfuré contenu dans un mélange gazeux et la
récupération du soufre formé, qui se prête à une mise en oeuvre
à une température inférieure à 112°C, sans risque de bouchage
du réacteur ou d'apparition de réactions secondaires.

L'invention vise également à proposer un procédé dans lequel
la séparation du gaz partiellement épuré, du solvant clarifié
et du soufre produit s'effectue dans une zone calme distincte
du réacteur.

A cet effet, le procédé selon l'invention est caractérisé en ce que la réaction de l'hydrogène sulfuré contenu dans le gaz à épurer sur l'anhydride sulfureux est réalisée à une température inférieure à 112°C, dans un réacteur muni d'une agitation et comprenant à sa partie supérieure un orifice d'évacuation vers un séparateur. Ainsi, le soufre solide qui se forme dans le réacteur et les sous-produits solides éventuels ne peuvent décanter dans le réacteur et sont entraînés par la phase liquide et éventuellement gazeuse vers l'orifice d'évacuation et le séparateur. L'orifice d'évacuation peut être commun aux trois phases, puisque la séparation s'effectue en dehors du réacteur, lequel pourra donc avoir une structure simple.

Le dispositif d'agitation dont est muni le réacteur pourra être d'un type connu en soi, susceptible d'accroître la turbulence du milieu réactionnel et de favoriser le mélange des différents composés présents. Avantageusement, le réacteur pourra être cylindrique et être équipé d'un agitateur à pales entraîné en rotation coaxialement au cylindre; pour accroître l'agitation, des déflecteurs pourront faire saillie sur la paroi cylindrique interne du réacteur.

Le réacteur pourra en outre être équipé d'une double enveloppe à circulation d'eau, afin d'évacuer de façon simple et peu coûteuse les calories de la réaction. Des arrivées de solvant et de réactifs seront prévues sensiblement à un même niveau à la base du réacteur.

Enfin, la partie supérieure du réacteur à agitation sera mise en communication avec un séparateur, par exemple un décanteur de type classique, qui pourra avantageusement comporter un racleur à palettes, au niveau du fond du décanteur, en vue de l'évacuation de la phase solide.

Des orifices d'évacuation de la phase liquide seront aménagés de façon connue en soi dans les parois du décanteur.

- 5 -                                    0102894

Dans le procédé selon l'invention, la réaction de l'anhydride
sulfureux et de l'hydrogène sulfuré est effectuée en présence
d'un excès d'hydrogène sulfuré, le rapport molaire $H_2S/SO_2$
étant, par exemple, compris entre 3 et 2, de préférence entre
2,2 et 2.

On obtient ainsi, à la suite de cette étape de réaction, un
gaz partiellement épuré pouvant contenir jusqu'à 5% en volume
d'hydrogène sulfuré. L'excès d'hydrogène sulfuré contenu dans
ce gaz est ensuite absorbé dans le même solvant que celui dans
lequel est effectuée la réaction, la solution ainsi obtenue
étant recyclée au réacteur.

Le solvant utilisé pour la réaction de l'hydrogène sulfuré et
de l'anhydride sulfureux et pour l'absorption de l'excès d'hydrogène sulfuré peut comprendre au moins un composé choisi
dans le groupe constitué par les glycols et les monoéthers de
glycols, comme par exemple l'éthylène glycol, le diéthylène
glycol, le triéthylène glycol, ainsi que les éthers monométhylique et monoéthylique des diéthylène- et triéthylène glycols.
Les monoéthers de glycols sont préférés et, notamment, l'éther
monométhylique du diéthylène glycol.

La pression régnant à l'intérieur du réacteur peut être relativement basse. Il est préférable, toutefois, pour améliorer
le contact entre les composés réagissant, d'établir une pression qui peut être comprise entre 1 et 150 bars, de préférence
entre 5 et 80 bars.

La température régnant à l'intérieur du réacteur est inférieure à 112°C, température de fusion du soufre. Elle est de
préférence comprise entre 0 et 70°C.

La limite inférieure de cette gamme préférentielle est choisie
en raison de la viscosité du solvant qui devient importante
aux basses températures.

La limite supérieure de cette gamme préférentielle est choisie de façon à ce que le soufre ne cristallise pas lors du refroidissement effectué sur le solvant avant que celui-ci ne soit conduit dans des tours d'absorption.

Le gaz partiellement épuré sortant du réacteur est conduit dans un absorbeur où règne une température qui doit être telle que l'hydrogène sulfuré soit suffisamment soluble dans le solvant et que la tension de vapeur du solvant utilisé ne soit pas trop élevée. Elle peut être comprise, par exemple, entre 0 et 150°C et, de préférence, entre 20 et 60°C.

La pression à l'intérieur de cet absorbeur est de préférence voisine de celle régnant à l'intérieur du réacteur.

Le débit du solvant dans l'absorbeur doit être tel que la quasi-totalité de l'hydrogène sulfuré qui est introduit soit dissous dans le solvant. Afin d'améliorer l'absorption de l'excédent d'hydrogène sulfuré, le gaz partiellement épuré peut contenir jusqu'à 50% en volume et, de préférence, de 0,1 à 35% en volume d'ammoniac.

La solution d'hydrogène sulfuré obtenue lors de l'étape d'absorption étant recyclée au réacteur, l'ammoniac qu'elle contient joue également un rôle de catalyseur de la réaction. En outre, l'ammoniac neutralise les sous-produits acides, tels que les acides polythioniques, formés dans le réacteur.

Afin d'améliorer la solubilité de l'ammoniac dans le solvant, celui-ci peut contenir jusqu'à 75% en poids d'eau et, de préférence, jusqu'à 20% en poids d'eau. La limite supérieure de la teneur en eau du solvant est fixée par la nécessité de conserver au solvant un bon pouvoir solvant vis-à-vis de l'anhydride sulfureux; or ce pouvoir solvant diminue lorsque la teneur en eau augmente, contrairement à ce qui est observé avec l'ammoniac.

L'anhydride sulfureux nécessaire à la réaction peut être produit par la combustion du soufre formé lors de la réaction de l'hydrogène sulfuré et de l'anhydride sulfureux. Cette combustion peut être effectuée dans un four à soufre, avec de l'oxygène pur, ce qui permet d'introduire directement l'anhydride sulfureux dans le réacteur. Elle peut être également effectuée avec de l'air ou avec de l'air enrichi par de l'oxygène, l'anhydride sulfureux produit contenant alors de l'azote. Dans ce cas, l'anhydride sulfureux est de préférence mis en solution dans le solvant préalablement à son introduction dans le réacteur; cette mise en solution peut être effectuée par absorption à une température comprise entre 0 et 150°C, de préférence entre 20 et 60°C, et à une pression comprise entre 1 et 10 bars. Le débit de solvant doit être tel que la dissolution de l'anhydride sulfureux soit pratiquement totale.

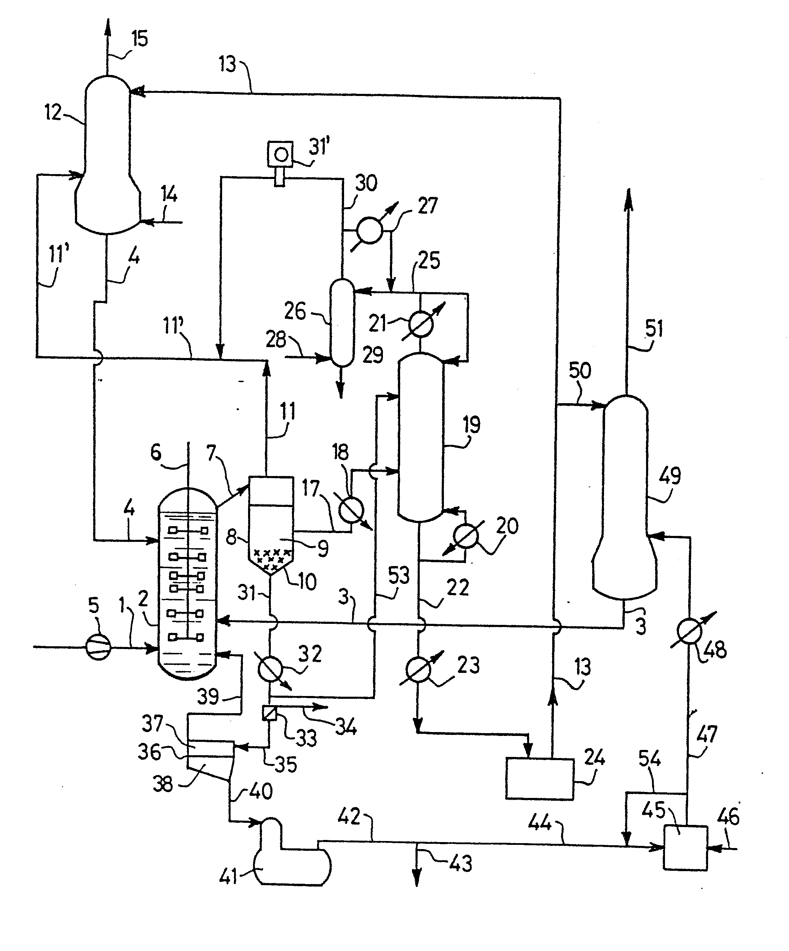

La figure unique, jointe à la description, à titre d'illustration non limitative, est un schéma d'une unité industrielle utilisant le procédé selon l'invention.

Dans cette forme de mise en oeuvre, le gaz à épurer contenant un ou plusieurs hydrocarbures et de l'hydrogène sulfuré est introduit par la ligne 1 dans la partie inférieure d'un réacteur 2.

Le réacteur 2 est également alimenté dans sa partie inférieure, par la ligne 3, en une solution d'anhydride sulfureux dans le solvant, dont la provenance sera expliquée plus loin. Dans la ligne 3, la concentration d'anhydride sulfureux dans le solvant est telle qu'elle correspond à une mole d'anhydride sulfureux pour deux moles d'hydrogène sulfuré contenu dans le gaz à épurer introduit dans le réacteur 2 par la ligne 1.

On introduit également dans le réacteur 2, par la ligne 4, du solvant contenant en solution de l'hydrogène sulfuré en quantité telle que le rapport molaire $H_2S/SO_2$ dans le réacteur soit compris entre 2 et 3, de telle façon que la réaction entre l'hydrogène sulfuré et l'anhydride sulfureux soit effectuée en présence d'un excès d'hydrogène sulfuré.

La solution d'hydrogène sulfuré introduite par la ligne 4 dans le réacteur 2 contient également de l'ammoniac.

La provenance de la solution de la ligne 4 sera expliquée plus loin. Si la pression du gaz à épurer introduit par la ligne 1 n'est pas suffisante, celle-ci peut être équipée d'un compresseur 5.

Du fait que la température du réacteur est inférieure à 112°C, le soufre formé par la réaction de l'hydrogène sulfuré et de l'anhydride sulfureux se trouve à l'état cristallisé en suspension dans le solvant.

Le réacteur 2 est du type agité et est donc équipé de préférence d'un agitateur 6.

L'agitation dans le réacteur développe une plus grande aire interfaciale par unité de volume et assure un coefficient global de transfert plus élevé qu'un réacteur garni. Il est résulte les avantages suivants:
- il est possible d'utiliser un réacteur de volume plus petit;
- les réactions dont la cinétique est conditionnée par le transfert gaz-liquide, notamment la réaction de Claus, sont favorisées aux dépens de certaines réactions secondaires qui se développent dans un réacteur de volume important, c'est-à-dire les réactions entre les oléfines, l'hydrogène sulfuré et le soufre, avec pour conséquence une formation moindre de sous-produits;
- on évite les bouchages, provoqués par les sels d'ammonium produits ou par les produits de corrosion, par effet de filtre d'un garnissage;
- la réaction de Claus peut être mise en oeuvre à froid avec, par conséquent, du soufre cristallisé présent dans le réacteur;
- le coefficient de transfert de chaleur entre le milieu du réacteur et la paroi de celui-ci est élevé, ce qui permet d'évacuer les calories de la réaction par une double enveloppe dans laquelle circule de l'eau, au lieu d'avoir à utiliser un échangeur réfrigérant interne qui serait sujet aux bouchages;

- la décantation du soufre et des autres sous-produits solides éventuellement présents est évitée, avec pour résultat une simplification des évacuations, une seule sortie par le haut du réacteur pouvant être prévue pour toutes les phases: gaz, liquide, solide.

On peut remarquer, sur la figure, que les différentes injections dans le réacteur se font de façon étagée.

En premier lieu, on met en contact le gaz à épurer, introduit par la ligne 1, avec un recycle de solvant, introduit par la ligne 39 et dont la provenance sera indiquée plus loin. On dissout ainsi partiellement l'hydrogène sulfuré dans le solvant.

Puis la solution d'anhydride sulfureux dans le solvant est injectée à un niveau supérieur par la ligne 3, à l'aide d'un diffuseur non représenté, mais décrit dans la demande de brevet précitée concernant le réacteur.

On évite ainsi le risque d'un rapport $\dfrac{SO_2}{H_2S}$ localement trop élevé qui favoriserait la formation d'acides polythioniques.

L'ammoniac est enfin injecté avec la solution contenue dans la ligne 4, après que la plus grande partie de la conversion de l'anhydride sulfureux en soufre ait été effectuée, ce qui peut se faire en dehors de la présence d'ammoniac agissant comme catalyseur.

La conversion totale de l'anhydride sulfureux est effectuée en haut du réacteur en présence d'ammoniac, ce qui a pour effet de minimiser la formation de thiosulfate d'ammonium, favorisée par la présence d'ammoniac.

L'effluent recueilli à la sortie du réacteur par le conduit 7 est conduit dans un décanteur 8.

On recueille, au sommet du décanteur 8, un effluent gazeux constitué par des hydrocarbures, de l'eau, de l'hydrogène sulfuré et de l'ammoniac, qui se sépare d'une suspension de soufre dans le·solvant contenant également à l'état dissous l'eau formée lors de la réaction, des hydrocarbures, de l'hydrogène sulfuré et de l'ammoniac.

Dans le décanteur, la suspension se sépare en deux phases:
- une phase supérieure 9, composée de solvant contenant en solution de l'eau, des hydrocarbures, de l'hydrogène sulfuré et de l'ammoniac;
- une phase inférieure 10, composée de soufre cristallisé, imbibé de solvant.

L'effluent gazeux recueilli par la ligne 11 est conduit par l'intermédiaire de la ligne 11' dans une tour d'absorption 12.

La tour d'absorption 12 est alimentée en solvant par la ligne 13, solvant dont la provenance sera expliquée plus loin.

La tour d'absorption 12 est également équipée d'une ligne 14, destinée à alimenter l'unité en ammoniac au démarrage de l'unité et à introduire éventuellement des appoints d'ammoniac quand cela est nécessaire.

On recueille, au sommet de la tour 12, par la ligne 15, le gaz épuré qui est conduit vers le circuit d'utilisation.

On recueille, au fond de la tour 12, par la ligne 4, une phase liquide constituée par du solvant contenant en solution de l'hydrogène sulfuré, de l'ammoniac et de l'eau. Cette phase est recyclée au réacteur 2.

La phase supérieure 9 recueillie au sommet du décanteur 8 par la ligne 17 est conduite, après passage dans un réchauffeur 18, dans une colonne d'entraînement 19, équipée d'un rebouilleur 20 et d'un condenseur 21. Cette colonne fonctionne à une température qui peut être comprise entre 100 et 145°C en tête de la colonne et 145°C et 200°C au fond, selon la pression de fonctionnement, laquelle peut être comprise entre 1 et 4 bars.
Dans cette colonne, l'eau contenue dans la charge de la ligne
17 sert à entraîner les hydrocarbures, l'hydrogène sulfuré et
l'ammoniac contenus dans la charge.

On recueille ainsi au fond de la colonne 19, par la ligne 22,
le solvant qui, après passage dans un réfrigérant 23, est
conduit dans un réservoir 24.

Le solvant nécessaire à l'alimentation de la tour d'absorption 12 est prélevé dans le réservoir 24 par la ligne 13.

On recueille au sommet de la colonne 19, par la ligne 25, un
mélange d'hydrocarbures, d'hydrogène sulfuré, d'ammoniac et
d'eau, qui est conduit dans une colonne d'entraînement à la
vapeur d'eau 26 équipée d'un reflux 27. De la vapeur d'eau
est introduite dans la colonne 26 par la ligne 28.

Cette colonne fonctionne à une température comprise entre
100 et 145°C et à une pression comprise entre 1 et 4 bars.

On recueille au fond de la colonne 26, par la ligne 29, de
l'eau et, au sommet, par la ligne 30, un mélange d'hydrogène
sulfuré, d'hydrocarbures et d'ammoniac, qui, après passage
dans un compresseur 31' est recyclé à la colonne 12 par l'intermédiaire de la ligne 11'.

La phase inférieure 10 contenue dans le décanteur 9 est recueillie par la ligne 31 et est conduite dans un réchauffeur
32 destiné à porter le soufre à l'état liquide. Il se produit
alors un dégazage de gaz dissous, de l'hydrogène sulfuré,
de l'ammoniac et des hydrocarbures qui sont conduits à la
colonne 19 par la ligne 53. Le soufre liquide est conduit dans
un filtre 33, destiné à séparer le sulfate d'ammonium formé
par réaction de l'ammoniac et de l'anhydride sulfureux. Le
sulfate d'ammonium est soutiré du filtre par la ligne 34.

On recueille à la sortie du filtre 33, par la ligne 35, du soufre liquide contenant du solvant, qui est conduit dans un séparateur liquide-liquide 36.

La phase liquide supérieure 37 est composée de solvant, qui est recyclé au réacteur 2 par la ligne 39.

La phase liquide inférieure 38 est composée de soufre liquide, qui est conduit dans un bac à soufre 41 par la ligne 40.

Le soufre est soutiré du bac 41 par la ligne 42. Une partie du soufre est évacuée par la ligne 43. Une autre partie du soufre sert à alimenter par la ligne 44 un four à soufre 45, qui est alimenté en air par la ligne 46. Afin de minimiser la quantité d'anhydride sulfurique $SO_3$ formé dans le four à soufre, celui-ci fonctionne avec un excès de soufre par rapport à l'air. Après condensation à la sortie du four dans un condenseur non représenté, l'excès de soufre est recyclé à la ligne 44 par la ligne 54.

Le mélange d'anhydride sulfureux et d'azote recueilli à la sortie du four 45 par la ligne 47 est conduit, après passage dans un réfrigérant 48, dans la partie inférieure d'une tour d'absorption 49.

A sa partie supérieure, la tour 49 est alimentée par la ligne 50 en solvant provenant du réservoir 24 par la ligne 13.

On recueille dans le fond de la tour 49, par la ligne 3, une solution d'anhydride sulfureux dans le solvant, solution qui est conduite dans le réacteur 2.

L'azote introduit dans la tour 49 par la ligne 47 est évacué au sommet de la tour par la ligne 51.

Le procédé selon l'invention peut être appliqué à l'élimination de l'hydrogène sulfuré contenu dans des gaz à épurer, quelle que soit la concentration dudit hydrogène sulfuré.
Ces gaz à épurer peuvent être constitués, par exemple, par
les effluents d'unités de raffinage de pétrole brut, comme
les unités de désulfuration ou de craquage catalytique. Il
peut s'agir également de gaz naturel ou de gaz de conversion de charbon.

Le procédé selon l'invention permet d'obtenir un gaz pouvant
contenir moins de 0,3% en volume d'hydrogène sulfuré.

L'exemple qui suit constitue une illustration de l'invention,
sans pour autant la limiter.

## EXEMPLE

Cet exemple concerne le traitement, par une unité telle que
celle représentée sur la figure annexée, d'un effluent d'une
unité d'hydrodésulfuration de gazole.

Le solvant utilisé dans cette unité est l'éther monométhylique du diéthylène glycol.

Le réacteur 2 est un réacteur agité et les tours 12 et 49
sont constituées par des colonnes à plateaux.

La température à l'intérieur du réacteur 2 est voisine de
60°C en tête et voisine de 50°C au pied, la pression étant
voisine de 6 bars.

La température à l'intérieur de la tour 49 est voisine de
50°C, la pression étant voisine de 1,2 bar.

La température à l'intérieur de la tour 12 est voisine de
50°C, la pression étant voisine de 5,1 bars.

Les débits et compositions des principales lignes de l'unité
sont indiquées dans le Tableau ci-après.

0102894

Tableau

| Ligne | Composition | | | Débit en t/h |
|---|---|---|---|---|
| 1 | Gaz à épurer (% en volume) | Hydrogène sulfuré<br>Hydrogène<br>Méthane<br>Hydrocarbures à au moins 2 atomes de carbone | 32,4 %<br>6,1 %<br>27,7 %<br><br>33,8 % | 3,2 |
| 3 | Solvant contenant 4,2 % en poids d'anhydride sulfureux. | | | 27,8 |
| 11 | Effluent gazeux (% en volume) | Hydrogène sulfuré<br>Ammoniac<br>Eau<br>Solvant<br>Hydrogène<br>Méthane<br>Hydrocarbures à au moins 2 atomes de carbone | 1,0 %<br>1,0 %<br>0,7 %<br><0,1 %<br>9,5 %<br>42,7 %<br><br>45,1 % | 1,8 |
| 17 | Effluent liquide (% en poids) | Eau<br>Solvant<br>Ammoniac<br>Hydrogène sulfuré<br>Hydrogène +<br>Hydrocarbures | 7,4 %<br>91,2 %<br>0,2 %<br>0,1 %<br><br>1,1 % | 39,4 |
| 11' | Effluent gazeux (% en volume) | Hydrogène sulfuré<br>Ammoniac<br>Eau<br>Hydrogène<br>Méthane<br>Hydrocarbures à au moins 2 atomes de carbone | 2,5 %<br>7,5 %<br>4,9 %<br>7,2 %<br>33,1 %<br><br>44,8 % | 2,6 |
| 42 | Soufre | | | 1,8 |
| 43 | Soufre | | | 1,2 |
| 44 | Soufre | | | 0,6 |
| 15 | Gaz épuré (% en volume) | Hydrogène<br>Méthane<br>Hydrocarbures à au moins 2 atomes de carbone<br>Hydrogène sulfuré<br>Ammoniac | 9,0 %<br>40,8 %<br><br><br>50,0 %<br>2 000 ppm<br>500 ppm | 2 |
| 13 | Solvant | | | 13 |

La conversion de l'hydrogène sulfuré en soufre est supérieure à 99%, ce qui montre bien l'intérêt du procédé selon l'invention.

Revendications

1. Procédé d'élimination de l'hydrogène sulfuré contenu dans un gaz à épurer, dans lequel la réaction dudit hydrogène sulfuré sur de l'anhydride sulfureux, est effectuée dans un solvant de ces deux composés et en présence d'un excès d'hydrogène sulfuré, ladite réaction conduisant à l'obtention, d'une part, d'un gaz partiellement épuré contenant l'excès d'hydrogène sulfuré utilisé pour la réaction et, d'autre part, de soufre formé lors de la réaction, ladite réaction étant suivie d'une absorption de l'excès d'hydrogène sulfuré contenu dans le gaz partiellement épuré dans un solvant de l'hydrogène sulfuré, ladite absorption conduisant à l'obtention, d'une part, d'un gaz épuré et, d'autre part, d'une solution d'hydrogène sulfuré dans un solvant qui est recyclée dans la zone réactionnelle, ledit procédé étant caractérisé en ce que la réaction est effectuée dans un solvant commun à l'hydrogène sulfuré et à l'anhydride sulfureux, à une température inférieure à 112°C, dans un réacteur à agitation comprenant à sa partie supérieure un orifice d'évacuation vers un séparateur d'où est récupéré le soufre à l'état solide.

2. Procédé selon la revendication 1, caractérisé en ce que le gaz à épurer et l'anhydride sulfureux sont introduits à la partie inférieure de la zone réactionnelle.

3. Procédé selon la revendication 1, caractérisé en ce que la réaction est effectuée dans un réacteur à double enveloppe à circulation d'eau.

4. Procédé selon l'une des revendications 1 à 3, caractérisé en ce que le soufre est récupéré cristallisé à la partie inférieure d'un décanteur.

5. Procédé selon l'une des revendications 1 à 4, caractérisé en ce que la réaction de l'hydrogène sulfuré et de l'anhydride sulfureux est effectuée à une température comprise entre 0°C et 70°C.

6. Procédé selon l'une des revendications 1 à 5, caractérisé en ce que la réaction et l'absorption de l'excès d'hydrogène sulfuré contenu dans le gaz partiellement épuré sont conduites en présence d'ammoniac en quantité telle que le gaz partiellement épuré soumis à l'absorption contienne jusqu'à 50% en volume et, de préférence, de 0,1 à 35% en volume d'ammoniac.

7. Procédé selon la revendication 5, caractérisé en ce que le solvant contient au plus 75% et, de préférence, au plus 20% en poids d'eau.

8. Procédé selon l'une des revendications 1 à 7, caractérisé en ce que la réaction entre l'hydrogène sulfuré et l'anhydride sulfureux est conduite dans un réacteur dans lequel sont d'abord mis en présence le gaz à épurer contenant l'hydrogène sulfuré et une fraction du solvant commun à l'hydrogène sulfuré et à l'anhydride sulfureux, ledit gaz à épurer et ladite fraction de solvant étant injectés dans le réacteur à un niveau inférieur de celui-ci, le mélange ainsi réalisé étant ensuite mis en présence d'une solution de l'anhydride sulfureux dans ledit solvant injectée dans le réacteur, à un niveau supérieur au précédent, et le mélange résultant étant enfin mis en présence de la solution d'hydrogène sulfuré de recycle dans ledit solvant, à un niveau encore supérieur dudit réacteur.

9. Procédé selon les revendications 5 et 8 en combinaison, caractérisé en ce que l'ammoniac est injecté dans le réacteur avec ladite solution d'hydrogène sulfuré de recycle.

Office européen des brevets

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| X,Y | FR-A-1 212 350 (TOWNSEND) <br><br> * Pages 7,8, exemple 2; page 7, colonne de gauche, lignes 15-24; page 10, revendications; figure 10 * | 1,2,4, 5,7,8 | C 01 B 17/05 |
| | --- | | |
| Y | FR-A-1 601 098 (INSTITUT FRANCAIS DU PETROLE, DES CARBURANTS ET LUBRIFIANTS) <br> * Pages 2-3, revendications; page 2, colonne de gauche, lignes 32-36 * | 1,5,6 | |
| | --- | | |
| A | FR-A-2 187 680 (INSTITUT FRANCAIS DU PETROLE, DES CARBURANTS ET LUBRIFIANTS) | | |
| | --- | | DOMAINES TECHNIQUES RECHERCHES (Int. Cl. 3) |
| A | FR-A-1 492 013 (INSTITUT FRANCAIS DU PETROLE, DES CARBURANTS ET LUBRIFIANTS) | | C 01 B 17/05 |
| | ----- | | |

Le présent rapport de recherche a été établi pour toutes les revendications

| Lieu de la recherche <br> LA HAYE | Date d'achèvement de la recherche <br> 11-11-1983 | Examinateur <br> STEELANDT B. |
|---|---|---|

OEB Form 1503 03 82

. CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant